(19) Europäisches Patentamt
European Patent Office
Office européen des brevets

(11) Veröffentlichungsnummer: **0 263 264 A2**

# (12) EUROPÄISCHE PATENTANMELDUNG

(21) Anmeldenummer: **87111612.5**

(22) Anmeldetag: **11.08.87**

(51) Int. Cl.4: **C08K 5/10** , C08K 5/11 , C08L 71/04

(30) Priorität: **08.10.86 DE 3634224**

(43) Veröffentlichungstag der Anmeldung: **13.04.88 Patentblatt 88/15**

(84) Benannte Vertragsstaaten: **AT BE DE FR GB IT NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Bartmann, Martin, Dr.**
**Burgstrasse 35**
**D-4350 Recklinghausen(DE)**
Erfinder: **Ribbing, Wilfried, Dr.**
**Hesternweg 20**
**D-4270 Dorsten 12(DE)**

## (54) Verfahren zur Verbesserung der Farbqualität von PPE bzw. PPE-haltigen Formmassen.

(57) Die Erfindung betrifft ein Verfahren zur Verbesserung der Farbqualität von PPE bzw. PPE-haltigen Formmassen. Dieses besteht darin, daß man der organischen PPE-Lösung vor ihrer Erwärmung auf Temperaturen über 150 °C einen alpha,beta-ungesättigten Säureester der Formel

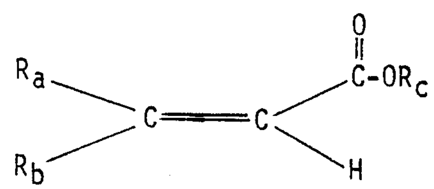

zusetzt. $R_a$ und $R_b$ haben unabhängig von einander die Bedeutung von H, $CH_3$, $COOR_c$ und Ph. $R_c$ steht für eine C(1-10)-Alkylrest.

EP 0 263 264 A2

## Verfahren zur Verbesserung der Farbqualität von PPE bzw. PPE-haltigen Formmassen

Gegenstand der Erfindung ist ein Verfahren zur Verbesserung der Farbqualität von Formmassen, die Polyphenylenether (PPE) enthalten oder ausschließlich daraus bestehen.

Es ist bekannt, daß PPE gegenüber thermischer Belastung sehr empfindlich ist, was sich - auch in Abwesenheit von Sauerstoff - an der Bildung tief dunkel gefärbter Produkte mit Chinonstruktur zeigt. Verunreinigungen aller Art beeinflussen naturgemäß in erheblichem Maße die Farbqualität von PPE und PPE-haltigen Formmassen. Dem Problem kommt insbesondere dann Bedeutung zu, wenn man das PPE nicht durch Fällung mit einem sogenannten Antilösemittel isoliert, sondern - was verfahrensmäßig vorteilhafter ist - nach einem sogenannten Direktisolationsverfahren aufarbeitet. Ein solches Verfahren besteht darin, das nach der oxidativen Kupplungsreaktion in Lösung anfallende Polymere von störenden Verunreinigungen (Katalysatorbestandteilen und Nebenprodukten der Reaktion wie Diphenochinon) zu befreien, das Lösemittel auf destillativem Wege größtenteils abzutrennen und das Material - gegebenenfalls unter Zusatz weiterer Polymerbestandteile, Flammschutzmittel und sonstiger Zusatzstoffe - in einen Extruder einzuführen.

Es ist bekannt, daß man die OH-Endgruppen des Polyphenylenethers durch Umsetzung mit reaktiven Verbindungen, wie z. B. Säurechloriden und Säureanhydriden, in eine stabile Form überführen kann.

Die JP-OS 71/02837 sieht vor, die Endgruppen des PPE in Gegenwart von basischen Verbindungen mit Acrylamiden umzusetzen, um das PPE gegen oxidativen Abbau zu schützen. Trotzdem kommt es auch bei solchen verkappten Polyphenylenethern unter Wärmeeinwirkung zu unbefriedigenden Farbveränderungen. Es ist daher davon auszugehen, daß die beobachteten Reaktionen nicht auf die Endgruppen des PPE beschränkt sind.

Aus der DE-PS 16 94 258 ist der Zusatz von 0,1 bis 6 Gewichtsprozent organischen Phosphiten als Stabilisatoren für PPE bekannt. Derartige Stabilisatoren bewirken, daß das PPE bei der Weiterverarbeitung von Pulver oder Granulat nicht oxidativ geschädigt wird.

Es wurde vorgeschlagen, den Polymerlösungen Chelatisierungsmittel und weitere Stabilisierungsmittel, wie z. B. zweiwertige Phenole und Reduktionsmittel (vgl. DE-OS 27 54 887 und DE-PS 26 16 746) oder aromatische Amine (vgl. DE-OS 27 55 937), zuzusetzen. Während die Chelatisierungsmittel die nachteiligen Einflüsse von Resten des Metallkatalysators im Produkt aufheben sollen, dienen die Reduktionsmittel dazu, farbige Chinone umzusetzen. Diese Lösungen sind unbefriedigend, da man die Zusatzstoffe in teilweise beträchtlichen Konzentrationen benötigt. Außerdem wird die Isolierung der Polyphenylenether dadurch zusätzlich erschwert. Mit diesen Maßnahmen ist insbesondere keine Farbstabilisierung bei Anwendung höherer Temperaturen erreichbar.

Als weitere Schwierigkeit kommt hinzu, daß PPE allein sowie Mischungen mit Styrolpolymerisaten während der Extrusion zu einem Molekulargewichtsaufbau neigen. Dies ist ungünstig, da die Fließeigenschaften des Polymeren dann zurückgehen und bei der Extrusion höhere Temperaturen erforderlich werden (vgl. EP-OS 0 121 974, Seite 1). Um dies zu vermeiden, wird vorgeschlagen, zur Stabilisierung des Molgewichts bei der Extrusion von PPE bzw. PPE-Formmassen feste Dienophile wie Maleinimide, Maleinsäureamide, die unter den beschriebenen Reaktionbedingungen in Maleinimide übergehen, und Acenaphthalin einzusetzen. Diese Verbindungen sind thermisch nicht stabil, bei höheren Temperaturen tritt thermische Polymerisation auf. Ausdrücklich werden Bismaleinimide (s. US-PS 4 389 516 = DE-PS 31 11 403) ausgeschlossen, die bereits zwischen 180 und 240 °C vernetzte Strukturen ausbilden (vgl. Polym. <u>26</u>, 1561 ff. (1985). Dieses "Curing" soll über freie Radikale verlaufen (s. Schema).

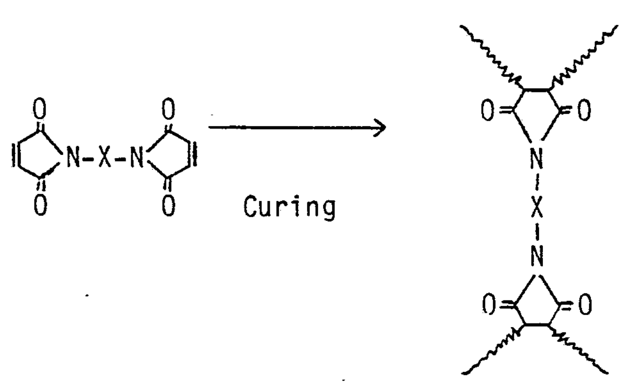

Wenn, wie in EP-OS 0 121 974, Seite 3, Zeilen 1 - 5, ausgeführt, bei dieser Reaktion in Gegenwart von PPE vernetzte Composits erhalten werden, so ist davon auszugehen, daß das PPE im Falle der Bismaleinimide über Radikalübertragungsreaktionen in dieses Netzwerk mit eingebaut wird. Dies ist unerwünscht, da es zu einer Erhöhung des Molekulargewichts mit den beschriebenen nachteiligen Folgen kommt.

Nach Erkenntnissen, die in der DE-OS 24 30 130 niedergelegt sind, schreitet die oxidative Kupplungsreaktion von monomeren Phenolen auch nach Abstoppung der eigentlichen Reaktion fort, wobei einerseits eine "reißverschlußartige Depolymerisationreaktion" und andererseits eine Vernetzungsreaktion auftritt. Letztere wird dadurch verursacht, daß Wasserstoffatome am alpha-C-Atom der Seitenkette abgespalten und aktive Methylengruppen gebildet werden. Diese Reaktionen finden auch dann statt, wenn der Katalysator inaktiviert ist. Nach gleichzeitiger Behandlung des PPE mit einem zweiwertigen Phenol oder Benzochinon und einem milden Reduktionsmittel wie z. B. Hydrazin (vgl. DE-PS 24 30 130) gelingt es zwar, nach der oxidativen Kupplungsreaktion ein PPE reproduzierbarer Molmasse zu erhalten. Die Probleme, die bei der Extrusion auftreten, werden jedoch nicht gelöst.

Pfropfcopolymere, die durch Polymerisation von Styrol in Gegenwart von PPE und eines Radikalinitiators hergestellt werden, sollen nach Angaben der japanischen Offenlegungsschrift 72/105 414 eine verbesserte Farbqualität aufweisen. Dieses Verfahren ist somit für Formmassen, die kein Polystyrol enthalten, ungeeignet.

Ziel der Erfindung ist es, ein Verfahren zur Herstellung von PPE bzw. PPE-haltigen Formmassen zu entwickeln, das folgenden Zielen gerecht werden soll:

-Bei der thermischen Behandlung von PPE und PPE-haltigem Material, das vorzugsweise nach dem Direktisolationsverfahren gewonnen wird, kommt es zu Verfärbungen die auf die Bildung von Chinonen, insbesondere Diphenochinon, zurückzuführen sind. Diese sollten in eine Form 5 überführt werden, in der sie - auch nach Erwärmung - keinen Anlaß zur Farbverschlechterung des Produktes liefern. Dieser Effekt, der bereits bei 140 °C und darunter eintreten kann und bei Temperaturen über 200 °C sehr ausgeprägt ist, ist unerwünscht. Nach dem Stand der Technik benötigt man zur Herstellung von PPE und PPE-haltigen Formmassen Temperaturen, die üblicherweise über 240 °C liegen.

-Das nach dem Direktisolationsverfahren hergestellte PPE neigt zu einem Molekulargewichtsaufbau bei erhöhten Temperaturen. Dies macht sich insbesondere bei der Extrusion negativ bemerkbar, da gleichzeitig die Fließeigenschaften zurückgehen.

Es wurde jetzt gefunden, daß man PPE bzw. PPE-haltige Formmassen verbesserter Farbqualität erhält, wenn man der organischen PPE-Lösung, einen alpha,beta-ungesättigten Säureester in Mengen von 0,5 bis 5 Gew.-%, bezogen auf das vorliegende PPE, zusetzt, bevor die Temperatur der Lösung über 150 °C erhöht wird, und anschließend die PPE-Lösung in üblicher Weise weiterbehandelt.

Die Wirkung des Säureesters beruht darauf, daß sich überraschenderweise entsprechend dem nachfolgenden Formelschema ein Diels-Alder-Addukt aus dem Säurederivat und dem Diphenochinon bildet (vgl. Abbildung):

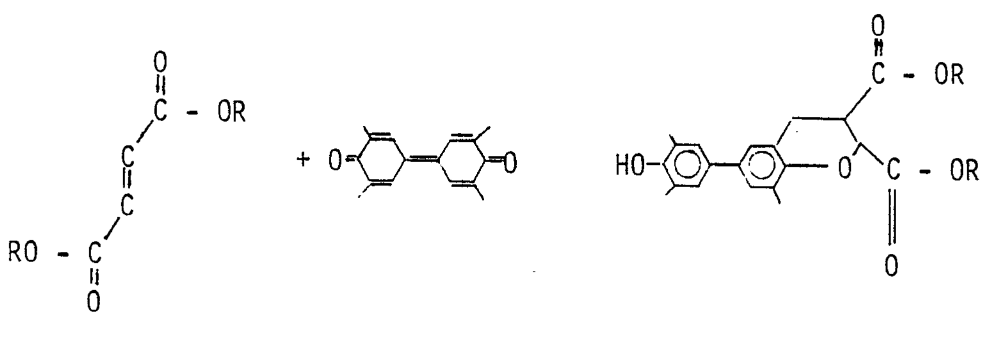

Mit der Erfindung werden folgende Vorteile erzielt:

1. Die Dienophile werden gemäß EP-PS 0 121 974 in fester Form mit den Polyphenylenethern gemischt und die resultierende Mischung weiterverarbeitet. Um eine homogene Wirkung zu gewährleisten, ist je nach Viskosität der Schmelze eine mehr oder weniger gründliche Durchmischung erforderlich. Die homogene Durchmischung einer kleinen Flüssigkeitsmenge mit einer großen Menge Feststoff, der hier als Pulver vorliegt, ist technisch aufwendig. Demgegenüber können erfindungsgemäß die alpha,beta-ungesättigten Ester während oder nach der oxidativen Kupplungsreaktion einer verdünnten Lösung des PPE zugesetzt

werden und ergeben sofort eine homogene Lösung. Die Zugabe der alpha,beta-ungesättigen Ester vor Beginn der oxidativen Kupplungsreaktion, beispielsweise zum monomeren Phenol ist technisch besonders vorteilhaft. Ein Zusatz der in der EP-PS 0 121 974 vorgesehenen Maleinsäureanhydridderivate zu Beginn der oxidativen Kupplungsreaktion ist nicht möglich, daß diese Verbindungen unter den Reaktionsbedingungen chemisch nicht stabil sind.

2. Maleinsäureanhydrid, -amid und -imid sowie Acenaphthalin neigen in der Hitze zur thermischen Polymerisation. Dies bedeutet, daß nur ein geringer Teil dieser Verbindungen eine farbstabilisierende Wirkung entfalten kann. Bismaleinimide bilden überdies unerwünschte vernetzte Strukturen. Die alpha,beta-ungesättigten Ester stehen dagegen uneingeschränkt zur Verfügung.

3. Die alpha,beta-ungesättigten Ester verbessern nicht nur die Farbqualität des PPE, sondern verhindern auch den unerwünschten Molekulargewichtsaufbau des PPE bei der Extrusion (siehe Tabellen 1 und 2).

4. Die nach diesem Verfahren erhaltenen Polyphenylenether lassen sich besser verarbeiten, da sie fließfähiger sind.

Verfahren zur oxidativen Kupplungsreaktion von Phenolen sind dem Fachmann bekannt (vgl. z. B. DE-OSS 32 24 692, 32 24 691, 33 13 864, 33 32 377, 33 37 629, 34 19 601 und 34 42 141 und die in diesen Schriften zitierte Literatur).

Geeignete Phenole weisen die Formel

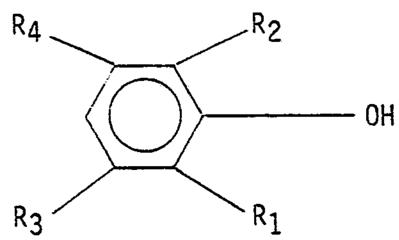

mit $R_3$, $R_4$ = H, $CH_3$ auf,
wobei $R_1$ und $R_2$ die Bedeutung von n-oder i-Alkylresten mit 1 bis 6 C-Atomen haben. Vorzugsweise werden 2,6-Dimethylphenol oder 2,3,6-Trimethylphenol eingesetzt.

Vorzugsweise wird die Reaktion in Gegenwart eines Kupferaminkatalysators und gegebenenfalls eines Aktivators durchgeführt.

Es gibt verschiedene Möglichkeiten, die oxidative Kupplungsreaktion abzustoppen und das Polymere von Verunreinigungen zu reinigen (vgl. beispielsweise DE-OSS 33 32 377, 34 19 601 und 34 42 141).

Nach der Variante, die hier bevorzugt wird, stoppt man die Polykondensation durch Zugabe einer verdünnten wäßrigen Lösung von Triethanolamin und Einleiten von Kohlendioxid. Die organische Phase wird abgetrennt und einer Reaktionsextration gemäß Verfahren der DE-OS 33 32 377 unterworfen. Schließlich wird die Lösung durch Destillation bei Normaldruck soweit eingeengt, bis eine Feststoffkonzentration von etwa 50 Gewichtsprozent erreicht ist.

Übliche organische Lösemittel, in denen das PPE anfällt, umfassen insbesondere aromatische Kohlenwasserstoffe wie z. B. Toluol oder Xylol, sowie deren Gemische mit niedrigen Alkoholen, chlorierte Kohlenwasserstoffe wie Chloroform, Methylenchlorid, Dichlorethan, etc.

Geeignete alpha,beta-ungesättigte Säureester werden am besten durch die Formel

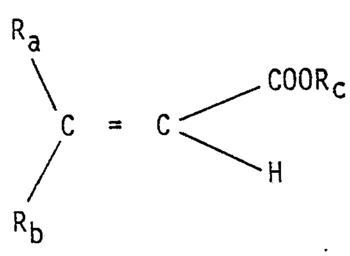

beschrieben. Hierbei stehen $R_a$ und $R_b$ unabhängig voneinander für Wasserstoff, den Methylrest, die Estergruppe $-COOR_c$ oder den Phenylrest. Bevorzugt werden Fumarsäureester und Zimtsäureester. $R_c$ ist ein Alkylrest von 1 - 10, insbesondere 1 bis 5 C-Atomen.

Die Gesamtmenge der Ester liegt, bezogen auf das vorliegende PPE, bei 0,5 bis 5 Gew.-%.

Die Ester können der PPE-Lösung vor, während oder nach der oxidativen Kupplungsreaktion zugesetzt werden. Sie sind so hydrophob, daß sie bei der wäßrigen Aufarbeitung zum überwiegenden Teil in der organischen Phase verbleiben und unter den Bedingungen der oxidativen Kupplungsreaktion und der anschließenden Aufarbeitung unter Abtrennung des Katalysators inert sind. Es ist auch möglich, die Ester bei der Aufarbeitung zuzusetzen. Entscheidend ist, daß der Ester der PPE-haltigen Lösung zugesetzt werden muß, bevor die Lösung einer Temperatur von mehr als 150 °C, vorzugsweise bereits mehr als 100 °C, unterworfen wird.

Die anschließende Weiterbehandlung erfordert die Anwendung erhöhter Temperaturen, um das PPE vom Lösemittel zu befreien. Ein Verfahren zur Aufkonzentrierung von PPE-Lösungen wird in der deutschen Patentanmeldung P 36 00 754.4 vom 14.01.1986 beschrieben.

Es ist üblich, geringe Restmengen von Lösemitteln in einem Extruder zu entfernen, wobei die Temperaturen auf 240 °C und mehr steigen können. In der Praxis wird meist nicht reines PPE synthetisiert. Vielmehr setzt man entweder verdünnten oder konzentrierten PPE-Lösungen oder der PPE-Schmelze Polystyrol zur Verbesserung der Fließfähigkeit zu (vgl. DE-OS 33 37 629 und deutsche Patentanmeldung P 36 03 798). Es ist auch möglich, dem PPE andere Polymere wie z. B. Polyolefine, Polyamide, schlagzäh modifizierte Styrolpolymerisate zuzusetzen, wie dies aus der Literatur bekannt ist.

Die nachfolgenden Beispiele zeigen, daß durch Zusatz der Ester die Absorption (log $I_0/I$) bei 420 und 500 nm verringert und somit die Farbqualität verbessert wird. Aus den J-Werten, die ein Maß für das jeweilige Molekulargewicht darstellen, ist zu ersehen, daß ein unbehandelter Polyphenylenether einen erheblichen Molekulargewichtsaufbau erfährt, wenn er 30 Minuten auf 300 °C erhitzt wird. Diese Temperaturbehandlung entspricht der thermischen Belastung, die das PPE bei dem Verfahren der Direktisolation erfährt. Eine vergleichbare Belastung erfährt das Produkt, das als Pulver gefällt wurde, und anschließend zur Herstellung PPE-haltiger Formmassen verwendet wird.

Beispiele 1 - 4 und Vergleichsversuch A

Es wird jeweils eine Lösung von 1,5 g $CuCl_2 \bullet H_2O$ in 20 g Methanol in einem 3 l-Reaktor unter Rühren (750 U/min) und unter Durchleiten von Stickstoff (100 l/h) mit einer Mischung aus 1 300 g Toluol, 177 g Methanol, 30 g Morpholin und 1,5 g N,N'-Di-tert.-butylethylendiamin bei 30 °C vereinigt. Nach 5 Minuten ersetzt man die Stickstoff-Zufuhr durch einen Luftstrom von 100 l/h und tropft über einen Zeitraum von 30 Minuten eine Lösung aus 150 g 2,6-Dimethylphenol und den in Tabelle 1 aufgeführten Zusätzen in 150 g Toluol zu. Nach 55 Minuten reduziert man den Luftstrom auf 40 l/h. 15 Minuten später stoppt man die Polykondensation durch Zugabe einer Lösung von 2 g Triethanolamin in 425 ml Wasser und leitet $CO_2$ (200 l/h) ein, bis die exotherme Reaktion abgeklungen ist. Anschließend trennt man die Phasen, kocht die isolierte organische Phase zweimal mit 425 ml Wasser und 2 g Triethanolamin 30 Minuten unter Rückluß, isoliert die organische Phase und erhöht die Feststoffkonzentration durch Destillation bei Normaldruck auf 50 Gew.-%. Die abgekühlten, erstarrten Massen werden in einem Edelstahlautoklaven 30 Minuten auf 300 °C erhitzt. Nach dem Erkalten stellt man aus den Rückständen 1 %ige Lösungen in Chloroform her und bestimmt die Absorption bei 420 und 500 nm (1 cm-Zelle).

Tabelle 1

| Beispiel Nr. | Zusatz | Teile/100 Teile PPE-Harz | J-Wert nach Abbruch der Polykondensation | J-Wert nach Erhitzen auf 300 °C | Absorption ($\log I_0/I$) bei 420 nm | Absorption ($\log I_0/I$) bei 500 nm |
|---|---|---|---|---|---|---|
| 1 | Fumarsäure-dibutylester | 5 | 55 | 57 | 0,38 | 0,11 |
| 2 | Fumarsäure-dibutylester | 2,5 | 55 | 59 | 0,42 | 0,13 |
| 3 | Fumarsäure-diethylester | 2,5 | 55 | 56 | 0,41 | 0,10 |
| 4 | Zimtsäure-methylester | 2,5 | 55 | 60 | 0,43 | 0,12 |
| A | - | - | 55 | 70 | 1,1 | 0,2 |

Beispiele 5 - 7 und Vergleichsversuch B

Man verfährt, wie in Beispiel 1 angegeben, jedoch setzt man den Fumarsäuredibutylester (Beispel 5, 6) bzw. den Zimtsäuremethylester (Beispiel 7) der organischen PPE-Lösung erst zu, nachdem die Polykondensation durch Zugabe einer wäßrigen Triethanolaminlösung und Einleiten von $CO_2$ beendet und die wäßrige Phase abgetrennt ist.
Einzelheiten sind der Tabelle 2 zu entnehmen.

Tabelle 2:

| Beispiel Nr. | Zusatz | Teile/100 Teile PPE-Harz | J-Wert nach Abbruch der Polykondensation | J-Wert nach Erhitzen auf 300 °C | Absorbance ($\log I_0/I$) bei 420 nm | Absorbance ($\log I_0/I$) bei 500 nm |
|---|---|---|---|---|---|---|
| 1 | Fumarsäuredibutylester | 5 | 55 | 57 | 0,36 | 0,09 |
| 2 | Fumarsäuredibutylester | 2,5 | 55 | 59 | 0,41 | 0,13 |
| 3 | Zimtsäuremethylester | 2,5 | 55 | 59 | 0,43 | 0,11 |
| B | - | - | 55 | 72 | 1,2 | 0,23 |

**Ansprüche**

1.Verfahren zur Herstellung von PPE bzw. PPE-haltigen Formmassen mit verbesserter Farbqualität, wobei das Lösemittel entfernt wird und gegebenenfalls weitere Komponenten zugesetzt werden,
dadurch gekennzeichnet,
daß man der organischen PPE-Lösung vor ihrer Erwärmung auf Temperaturen über 150 °C in Mengen von 0,5 bis 5 Gew.-%, bezogen auf das vorliegende PPE einen alpha,beta-ungesättigten Säureester der Formel

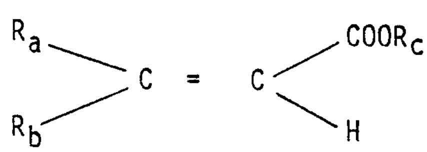

zusetzt, wobei $R_a$ und $R_b$ unabhängig voneinander die Bedeutung von H, $CH_3$, $COOR_c$ und Ph haben und $R_c$ für einen C(1-10)-Alkylrest steht und anschließend die PPE-Lösung in üblicher Weise weiterbehandelt.

2.Verfahren nach Anspruch 1,
dadurch gekennzeichnet,
daß man einen Fumarsäure-oder Zimtsäureester einsetzt.

3.Verfahren nach den Anprüchen 1 und 2,
dadurch gekennzeichnet,
daß man den Polyphenylenether nach dem Verfahren der Direktisolation herstellt.